# EUROPEAN PATENT APPLICATION

(11) **EP 4 475 095 A1**
(43) Date of publication of application: **11.12.2024**
(21) Application number: 24180131.5
(22) Date of filing: 05.06.2024
(51) Int. Cl.: G07C 5/08, B60R 16/023, B60Q 11/00, G07C 5/00

(54) **CONTROL DEVICE FOR IN-VEHICLE UNIT AND CONTROL METHOD OF IN-VEHICLE UNIT**

(30) Priority: 09.06.2023 JP 2023095605
(71) Applicant: JTEKT CORPORATION, Kariya-shi, Aichi-ken, 448-8652 (JP)
(72) Inventor: KOUDAI, Takashi, Kariya-shi, Aichi-ken, 448-8652 (JP); ABE, Kenichi, Kariya-shi, Aichi-ken, 448-8652 (JP); KAJISAWA, Yuuta, Kariya-shi, Aichi-ken, 448-8652 (JP); HASEGAWA, Kazuma, Kariya-shi, Aichi-ken, 448-8652 (JP); MONOBE, Kaishi, Kariya-shi, Aichi-ken, 448-8652 (JP); IKEYA, Mika, Kariya-shi, Aichi-ken, 448-8652 (JP); YAMASHITA, Masaharu, Toyota-shi, Aichi-ken, 471-8571 (JP); IIDA, Kazuaki, Toyota-shi, Aichi-ken, 471-8571 (JP); TAKAYAMA, Shintaro, Toyota-shi, Aichi-ken, 471-8571 (JP); NAKAJIMA, Nobuyori, Kariya-city, Aichi-pref, 448-8661 (JP)
(74) Representative: Winter, Brandl - Partnerschaft mbB

(57) **Abstract**

A control device (1) for an in-vehicle unit (2) installed in a vehicle having a warning light (9) includes a control circuit (50a) and a storage circuit (50b). The control circuit (50a) executes an abnormality detection process, a detection result write-in process, and a lighting request output process. The storage circuit (50b) retains contents of the history information even when the in-vehicle unit (2) is powered on or powered off. The control circuit (50a) is configured to retrieve the contents of the history information from the storage circuit (50b) when the in-vehicle unit (2) is powered on. When the detection history is written in the retrieved contents, the control circuit (50a) outputs the lighting request even when an abnormality of the in-vehicle unit (2) cannot be detected by the abnormality detection process.

## Description

### BACKGROUND OF THE INVENTION

### 1. Field of the Invention

The present invention relates to a control device for an in-vehicle unit and a control method of an in-vehicle unit.

### 2. Description of Related Art

For example, as described in Japanese Unexamined Patent Application Publication No. 2015-58911 (JP 2015-58911 A), there is a control device for an in-vehicle unit that is configured to output a lighting request to a warning light of a vehicle to notify a driver of a state of the in-vehicle unit. This control device for the in-vehicle unit outputs the lighting request to the warning light when an abnormality of a sensor output signal is determined about a sensor that the in-vehicle unit has.

### SUMMARY OF THE INVENTION

In a state where the sensor output signal itself is not output, for example, immediately after the in-vehicle unit is powered on, the above-described control device for the in-vehicle unit cannot perform the determination itself of an abnormality of the sensor output signal. In this case, even in a state where the sensor output signal is abnormal, the warning light cannot be lighted until a state where the sensor output signal is output arises. Thus, the state where the sensor output signal is abnormal and nevertheless the warning light fails to light occurs to some extent.

A first aspect of this disclosure is a control device for an in-vehicle unit. The in-vehicle unit is installed in a vehicle having a warning light. The control device is applied to the in-vehicle unit and configured to output a lighting request to the warning light to notify a driver of a state of the in-vehicle unit. The control device includes a control circuit configured to execute at least a process relating to the output of the lighting request, and a storage circuit configured to store at least information that is used in a process executed by the control circuit. The control circuit is configured to execute an abnormality detection process for detecting an abnormality of the in-vehicle unit, a detection result write-in process for, when the abnormality of the in-vehicle unit is detected by the abnormality detection process, writing a detection history showing the detection of the abnormality into history information of the storage circuit, and a lighting request output process for outputting the lighting request. The storage circuit is configured to retain contents of the history information even when the in-vehicle unit is powered on or powered off. The control circuit is configured to retrieve the contents of the history information from the storage circuit when the in-vehicle unit is powered on. The control circuit is configured to, when the detection history is written in the retrieved contents, output the lighting request even when the abnormality of the in-vehicle unit fails to be detected by the abnormality detection process.

According to this configuration, in the case where the detection history is written in the contents of the history information when the in-vehicle unit is powered on, the control circuit can output the lighting request from immediately after the power-on of the in-vehicle unit, even when the abnormality of the in-vehicle unit cannot be detected. For example, even when the abnormality of the in-vehicle unit cannot be detected, if the lighting request was output during the preceding power-on, the output state during the preceding power-on can be taken over to start the output from the current power-on. During the power-on after the lighting request was output during the preceding power-on, even when the abnormality of the in-vehicle unit cannot be detected, it is highly likely that the abnormality of the in-vehicle unit has been taken over from the preceding power-on. Thus, the occurrence of a state where there is the abnormality of the in-vehicle unit and nevertheless the warning light fails to light can be reduced.

In the control device for the in-vehicle unit, the control circuit may be configured to, when the abnormality of the in-vehicle unit is detected by the abnormality detection process, retrieve the contents of the history information from the storage circuit. The control circuit may be configured to output the lighting request based on the detection history written in the retrieved contents.

According to this configuration, discrepancy in contents between the lighting request and the history information can be prevented.

In the control device for the in-vehicle unit, the abnormality detection process may include a process of detecting recovery of the in-vehicle unit from the abnormality. The detection result write-in process may include a process of, when recovery of the in-vehicle unit from the abnormality is detected by the abnormality detection process, deleting the detection history from the history information of the storage circuit. The control circuit may be configured to, when recovery of the in-vehicle unit from the abnormality is detected by the abnormality detection process, retrieve the contents of the history information from the storage circuit. The control circuit may be configured to, when the detection history has been deleted from the retrieved contents, stop the output of the lighting request.

According to this configuration, when recovery of the in-vehicle unit from the abnormality is detected, the control circuit can delete the detection history from the history information and prevent the warning light from lighting. Thus, the situation where the warning light is allowed to light can be optimized.

In the control device for the in-vehicle unit, the control circuit may be configured to execute a starting process when the in-vehicle unit is powered on. The control circuit may be configured to retrieve the contents of the history information from the storage circuit during the starting process.

According to this configuration, even when the control circuit is configured to go through execution of the starting process after the in-vehicle unit is powered on, if the contents of the history information is the detection history, the lighting request can be output from immediately after the power-on. This is especially effective as a countermeasure against the abnormality of the in-vehicle unit that cannot be detected by the abnormality detection process in the situation of the starting process.

In the control device for the in-vehicle unit, the storage circuit may be configured to store diagnostic information. The diagnostic information may be information which is not used in a process executed by the control circuit and into which, when the abnormality of the in-vehicle unit is detected by the abnormality detection process, a diagnosis indicating the detection of the abnormality is written. The storage circuit may be configured to delete contents of the diagnostic information and the history information through operation from a diagnostic tool that is connected to the vehicle from the outside.

According to this configuration, the contents of the diagnostic information and the history information can be synchronized with each other through operation from the diagnostic tool. Thus, the diagnostic information and the history information, which are different from each other in the role and the method of management, can be appropriately managed.

A second aspect of this disclosure is a control method of an in-vehicle unit. The in-vehicle unit is installed in a vehicle having a warning light. The in-vehicle unit includes a control circuit configured to execute at least a process relating to output of a lighting request to the warning light for notifying a driver of a state of the in-vehicle unit, and a storage circuit configured to store at least information that is used in a process executed by the control circuit. The control method includes: detecting an abnormality of the in-vehicle unit by the control circuit; when the abnormality of the in-vehicle unit is detected, writing a detection history showing the detection of the abnormality into history information of the storage circuit by the control circuit; outputting the lighting request by the control circuit; retaining contents of the history information by the storage circuit even when the in-vehicle unit is powered on or powered off; when the in-vehicle unit is powered on, retrieving the contents of the history information from the storage circuit by the control circuit; and when the detection history is written in the retrieved contents, outputting the lighting request by the control circuit even when the abnormality of the in-vehicle unit fails to be detected.

According to the control device for the in-vehicle unit and the control method of the in-vehicle unit of the present invention, the occurrence of the state where there is the abnormality of the in-vehicle unit and nevertheless the warning light fails to light can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing the configuration of a steer-by-wire steering device according to an embodiment;
FIG. 2 is a block diagram showing the electrical configuration of the steering control device of FIG. 1;
FIG. 3 is a chart illustrating state transition of the CPU of FIG. 2;
FIG. 4 is a table illustrating correspondence relationships between a lighting request and contents to be written in a memory for various types of abnormalities;
FIG. 5 is a flowchart concerning the CPU of FIG. 2, illustrating a sequence of processes relating to detection of an inapplicable failure;
FIG. 6 is a flowchart concerning the CPU of FIG. 2, illustrating a sequence of processes relating to detection of an applicable failure; and
FIG. 7 is a chart showing one example of each of a state of the steering device, a detection state of an applicable failure, an output state of a lighting request, and contents of history information.

### DETAILED DESCRIPTION OF EMBODIMENTS

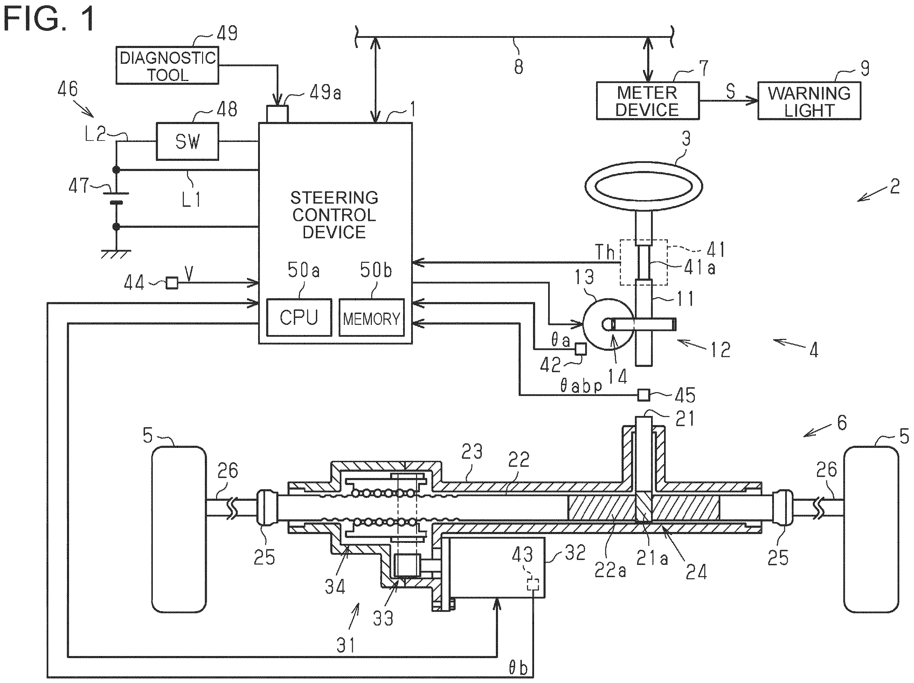

A control device for an in-vehicle unit according to one embodiment will be described. As shown in FIG. 1, a steering control device 1 is one example of the control device for an in-vehicle unit that is applied to an in-vehicle unit installed in a vehicle VC having a warning light 9. The steering control device 1 controls a steering device 2 as a target. The steering device 2 is one example of the in-vehicle unit installed in the vehicle VC. The steering device 2 is configured as a steering device for a steer-by-wire vehicle. The steering device 2 includes a steering unit 4 and a turning unit 6. The steering unit 4 is steered by a driver through a steering wheel 3 of the vehicle VC that is a steering member. The turning unit 6 turns left and right turning wheels 5 of the vehicle VC according to steering input into the steering unit 4 by the driver. The steering device 2 of this embodiment has, for example, a structure in which a power transmission path between the steering unit 4 and the turning unit 6 is mechanically always cut off. In this structure, a power transmission path between a steering actuator 12, to be described later, and a turning actuator 31, to be described later, is mechanically always cut off.

The steering unit 4 includes a steering shaft 11 and the steering actuator 12. The steering shaft 11 is coupled to the steering wheel 3. The steering actuator 12 has a steering-side motor 13 and a steering-side speed reduction mechanism 14. The steering-side motor 13 is a reaction force motor that applies a steering reaction force that is a force acting against steering to the steering wheel 3 through the steering shaft 11. The steering-side motor 13 is coupled to the steering shaft 11 through the steering-side speed reduction mechanism 14 that is formed by, for example, a worm-and-wheel. As the steering-side motor 13 of this embodiment, for example, a three-phase brushless motor is adopted.

The turning unit 6 includes a pinion shaft 21, a rack shaft 22, and a rack housing 23. The pinion shaft 21 and the rack shaft 22 are coupled together at a predetermined intersection angle. Pinion teeth 21a formed on the pinion shaft 21 and rack teeth 22a formed on the rack shaft 22 are meshed with each other to form a rack-and-pinion mechanism 24. The pinion shaft 21 corresponds to a rotating shaft of which rotation can be converted into a turning angle that is a turning position of the turning wheels 5. The rack housing 23 houses the rack-and-pinion mechanism 24.

One end of the pinion shaft 21 on the opposite side from a side coupled to the rack shaft 22 protrudes from the rack housing 23. Both ends of the rack shaft 22 protrude from both ends of the rack housing 23 in an axial direction. Tie rods 26 are coupled at both ends of the rack shaft 22 through rack ends 25 that are formed by ball joints. Leading ends of the tie rods 26 are coupled to knuckles (not shown) on which the left and right turning wheels 5 are respectively mounted.

The turning unit 6 includes the turning actuator 31. The turning actuator 31 includes a turning-side motor 32, a transmission mechanism 33, and a conversion mechanism 34. The turning-side motor 32 is a turning motor that applies a turning force for turning the turning wheels 5 to the rack shaft 22 through the transmission mechanism 33 and the conversion mechanism 34. The turning-side motor 32 transmits rotation to the conversion mechanism 34 through the transmission mechanism 33 that is formed by, for example, a belt transmission mechanism. The transmission mechanism 33 converts the rotation of the turning-side motor 32 into reciprocating motion of the rack shaft 22 through the conversion mechanism 34 that is formed by, for example, a ball screw mechanism. As the turning-side motor 32 of this embodiment, for example, a three-phase brushless motor is adopted.

In the steering device 2, as a motor torque is applied as the turning force from the turning actuator 31 to the rack shaft 22 according to the driver's steering operation, the turning angle of the turning wheels 5 is changed. Meanwhile, the steering reaction force acting against the driver's steering is applied from the steering actuator 12 to the steering wheel 3. Thus, in the steering device 2, a steering torque Th required to steer the steering wheel 3 is changed by the steering reaction force that is the motor torque applied from the steering actuator 12.

The reason for providing the pinion shaft 21 is to support the rack shaft 22 inside the rack housing 23 along with the pinion shaft 21. By a support mechanism (not shown) provided in the steering device 2, the rack shaft 22 is supported so as to be movable along an axial direction thereof and at the same time pressed toward the pinion shaft 21. Thus, the rack shaft 22 is supported inside the rack housing 23. However, another support mechanism that supports the rack shaft 22 in the rack housing 23 without using the pinion shaft 21 may be provided.

### Electrical Configuration of Steering Device

As shown in FIG. 1, the steering-side motor 13 and the turning-side motor 32 are connected to the steering control device 1. The steering control device 1 controls the operation of the motors 13, 32.

Detection results of various sensors are input into the steering control device 1. The various sensors include, for example, a torque sensor 41, a steering-side rotation angle sensor 42, a turning-side rotation angle sensor 43, a vehicle speed sensor 44, and a pinion absolute angle sensor 45.

The torque sensor 41 is provided on the steering shaft 11, at a portion between the steering wheel 3 and the steering-side speed reduction mechanism 14. The torque sensor 41 detects the steering torque Th that is a value indicating a torque applied to the steering shaft 11 by the driver's steering operation. The steering torque Th is detected in association with twisting of a torsion bar 41a that is an intermediate part of the steering shaft 11 and provided in the steering shaft 11, between the steering wheel 3 and the steering-side speed reduction mechanism 14. The steering-side rotation angle sensor 42 is provided on the steering-side motor 13. The steering-side rotation angle sensor 42 detects a rotation angle θa that is an angle of a rotating shaft of the steering-side motor 13 within a range of 360 degrees. The turning-side rotation angle sensor 43 is provided on the turning-side motor 32. The turning-side rotation angle sensor 43 detects a rotation angle θb that is an angle of a rotating shaft of the turning-side motor 32 within a range of 360 degrees. The vehicle speed sensor 44 detects a vehicle speed V that is a travel speed of the vehicle VC. The pinion absolute angle sensor 45 detects a pinion absolute rotation angle θabp that is an actually measured value of an angle of a rotating shaft of the pinion shaft 21 in a range exceeding 360°.

A power source system 46 is connected to the steering control device 1. The power source system 46 has a battery 47. The battery 47 is a secondary battery installed in the vehicle VC, and serves as an electric power source of electric power that is supplied for the steering-side motor 13 and the turning-side motor 32 to operate. Further, the battery 47 serves as an electric power source of electric power that is supplied for the steering control device 1 to operate.

Between the steering control device 1 and the battery 47, a start switch 48 ("SW" in FIG. 1) of the vehicle VC, such as an ignition switch, is provided. Of two power supply lines L1, L2 connecting the steering control device 1 and the battery 47 to each other, the start switch 48 is provided at an intermediate point of the power supply line L2 that branches off from the power supply line L1. The start switch 48 is operated to actuate a travel drive source of the vehicle VC, such as an engine, and start various functions so as to enable operation of the vehicle VC. Conduction of the power supply line L2 is turned on and off through operation of the start switch 48. In this embodiment, an operation state of the steering device 2 is linked to an operation state of the vehicle VC. While conduction of the power supply line L1 is basically normally on, the conduction of the power supply line L1 is indirectly turned on and off as a function of the steering device 2 according to the operation state of the steering device 2. The operation state of the steering device 2 is linked to on and off states of the conduction of the power supply lines L1, L2 that represent electric power supply states of the battery 47. The operation state of the steering device 2 becomes "power-on" when the conduction of the power supply lines L1, L2 is turned on based on operation of the start switch 48. The operation state of the steering device 2 becomes "power-off" when the conduction of the power supply lines L1, L2 is turned off based on operation of the start switch 48.

A diagnostic tool 49 can be connected to the steering control device 1. The diagnostic tool 49 is used, for example, at a maintenance factory, such as a dealership, that maintains the vehicle VC. The diagnostic tool 49 is connected to the vehicle VC from an outside. The steering control device 1 of this embodiment has a connector 49a. The diagnostic tool 49 is connected to the vehicle VC from the outside through the connector 49a of the steering control device 1. The connector 49a may belong to a control device that is installed in the vehicle VC separately from the steering control device 1, or may be installed in the vehicle VC as a dedicated connector. The diagnostic tool 49 is a tool for diagnosing an abnormal state about the vehicle VC.

In a state of being connected to the steering control device 1, through operation by a maintenance worker, the diagnostic tool 49 orders the vehicle VC, i.e., the steering control device 1 to set a factory mode that is a diagnosing state. The worker can take action about the vehicle VC, i.e., the steering control device 1 through operation of the diagnostic tool 49.

A meter control device 7 is connected to the steering control device 1 through an in-vehicle network 8, such as a CAN. The meter control device 7 is provided in the vehicle VC equipped with the steering device 2, separately from the steering control device 1. The meter control device 7 controls the operation of the in-vehicle warning light 9. The warning light 9 is a display device that notifies information by, for example, appealing to the visual sense of the driver. Examples of the display device include a head-up display (HUD), a meter panel, a display of a navigation system, and a light emitting diode (LED). The meter control device 7 generates a notification control signal S for the warning light 9.

### Functions of Steering Control Device

The steering control device 1 includes a central processing unit (hereinafter referred to as a "CPU") 50a and a memory 50b. The steering control device 1 executes various processes as the CPU 50a executes programs stored in the memory 50b on a predetermined arithmetic operation cycle. The CPU 50a and the memory 50b constitute a microcomputer that is a processing circuit. The memory 50b includes computer-readable media, such as a random-access memory (RAM) and a read-only memory (ROM). However, that the various processes are realized by software is one example. The processing circuit that the steering control device 1 has may be configured such that at least some of the processes are realized by a hardware circuit, such as a logic circuit. In this embodiment, the CPU 50a is one example of a control unit. The memory 50b is one example of a storage unit.

### Functions of CPU

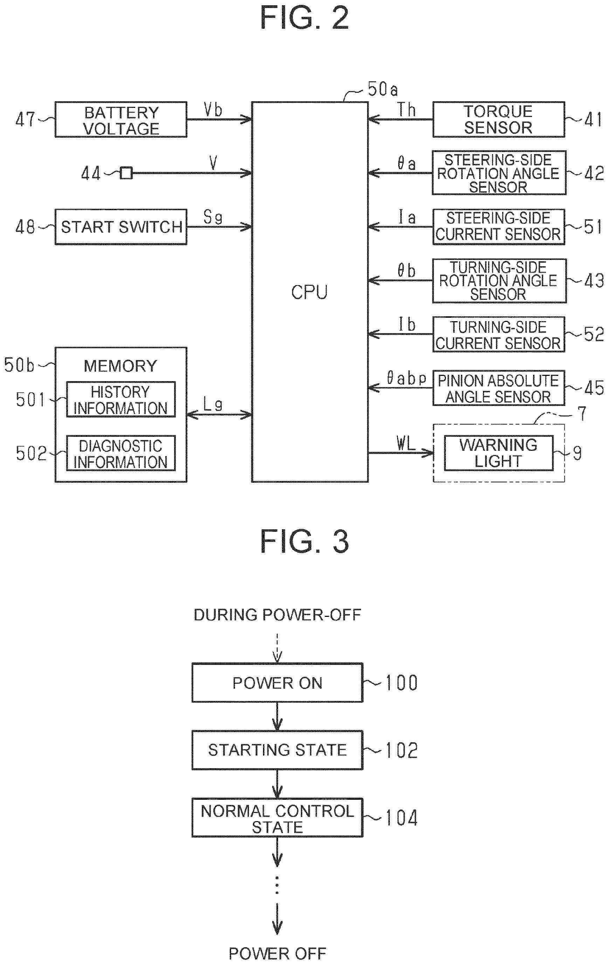

As shown in FIG. 2, various information is input into the CPU 50a. Examples of the various information include detection results of the above-described various sensors. In addition, the various information includes a battery voltage Vb of the battery 47, the on or off state of the start switch 48, a detection result of a steering-side current sensor 51, a detection result of a turning-side current sensor 52, and information retrieved from the memory 50b. The battery voltage Vb is a voltage value of the battery 47, and is, for example, a voltage value in the power supply line L1. The on or off state of the start switch 48 is determined according to presence or absence of input of an IG signal Sg. The steering-side current sensor 51 detects a steering-side actual current value Ia of the steering-side motor 13 that is a value of a current flowing through a connection line between a drive circuit (not shown) and a motor coil of each phase of the steering-side motor 13. The turning-side current sensor 52 detects a turning-side actual current value Ib of the turning-side motor 32 that is a value of a current flowing through a connection line between a drive circuit (not shown) and a motor coil of each phase of the turning-side motor 32.

The memory 50b has a plurality of storage regions including a storage part 501 and a storage part 502. The storage part 501 and the storage part 502 are different storage regions from each other. The storage part 501 is a storage region to write and store history information Bs therein. The storage part 502 is a storage region to write and store diagnostic information Dn therein.

Of information in the memory 50b, information that can be written in includes information of which contents are deleted for initialization according to power-on and power-off, and information of which contents are retained regardless of power-on and power-off. The information stored in the storage part 501 and the storage part 502 corresponds to the information of which the contents are retained regardless of power-on and power-off. The information stored in the storage part 501 is information that is retrieved by the CPU 50a to be used in a process executed by the CPU 50a. The information stored in the storage part 502 is information that is not retrieved by the CPU 50a and not used in a process executed by the CPU 50a. The information stored in the storage part 502 is information that is retrieved by the diagnostic tool 49 to be used at a maintenance factory. The information stored in the storage part 501 and the storage part 502 is information that can be deleted by the diagnostic tool 49.

As shown in FIG. 3, the CPU 50a includes a process in which, during power-off, the start switch 48 is turned on to turn the power on (step 100), and then the CPU 50a undergoes state transition via a starting state (step 102) to a normal control state (step 104). During the power-on, after the state transition to the normal control state, the normal control state continues until the power is turned off. The starting state is a state of executing a starting process that, by retrieving various information, for example, allows execution of a normal process relating to steering control for operating the steering device 2 according to the driver's steering operation. In the starting state, the CPU 50a does not execute the normal process. In the starting state, for example, the vehicle VC is stationary. In the normal control state, the CPU 50a executes the normal process. In the normal control state, for example, the vehicle VC is stationary or traveling.

### Abnormalities of Steering Device

The CPU 50a executes a process of detecting various abnormalities in the steering device 2 as the starting process and the normal process.

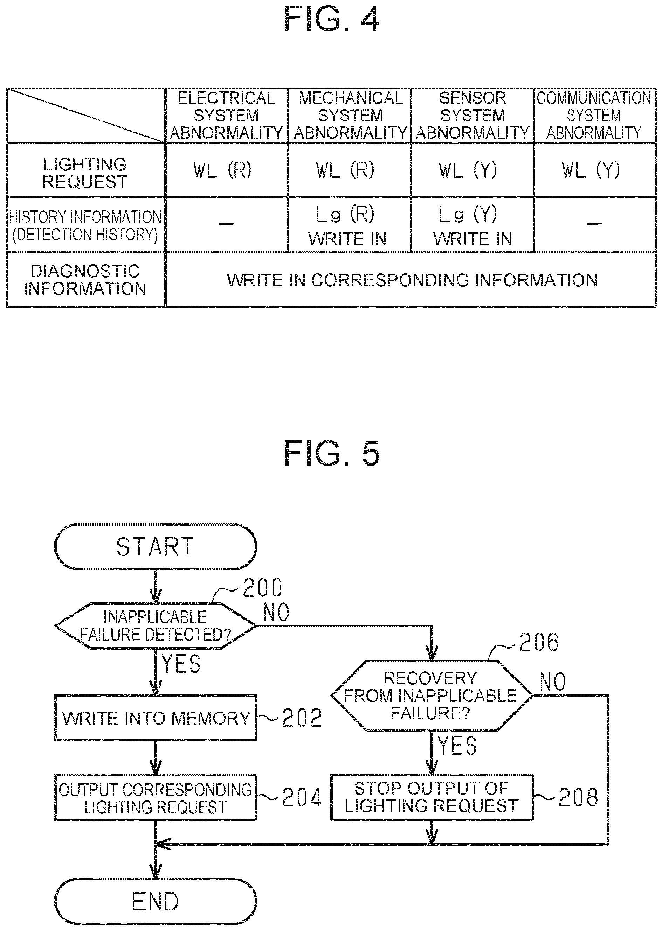

As shown in FIG. 4, examples of the various abnormalities include electrical system abnormalities, mechanical system abnormalities, sensor system abnormalities and communication system abnormalities. More specifically, electrical system abnormalities include operation abnormalities of the CPU 50a and the memory 50b and a power source abnormality of the battery 47. The CPU 50a detects an electrical system abnormality, for example, when normal operation is impossible due to a decrease in the battery voltage Vb. When an electrical system abnormality is detected, the CPU 50a sets a failed state of the steering device 2 in which, for example, the operation of the steering device 2 is stopped as it cannot operate normally.

Mechanical system abnormalities include mechanical abnormalities of the steering unit 4 including the steering-side motor 13 and mechanical abnormalities of the turning unit 6 including the turning-side motor 32. The CPU 50a detects a mechanical system abnormality, for example, when tooth skipping or belt fracture in the transmission mechanism 33 or the conversion mechanism 34 can be determined by, for example, comparing detection results of the turning-side rotation angle sensor 43 and the pinion absolute angle sensor 45. When a mechanical system abnormality is detected, the CPU 50a sets a failed state of the steering device 2 in which, for example, the vehicle VC is removed to a safe place according to the situation.

Sensor system abnormalities include abnormalities of the torque sensor 41, the steering-side rotation angle sensor 42, the turning-side rotation angle sensor 43, the pinion absolute angle sensor 45, the steering-side current sensor 51, and the turning-side current sensor 52. The CPU 50a detects a sensor system abnormality about the torque sensor 41, for example, when it can be determined, based on the steering torque Th of the torque sensor 41, that there is no input or that the value of the steering torque Th is not valid. The same applies to the steering-side rotation angle sensor 42, the turning-side rotation angle sensor 43, the pinion absolute angle sensor 45, the steering-side current sensor 51, and the turning-side current sensor 52. When a sensor system abnormality is detected, the CPU 50a sets a failed state of the steering device 2 in which, for example, some of the functions are restricted according to the situation.

Communication system abnormalities include a communication abnormality of the in-vehicle network 8. The CPU 50a detects a communication system abnormality, for example, when it can be determined, based on a signal received from the in-vehicle network 8, that there is no reception or that a signal that is not valid is received. When a communication system abnormality is detected, the CPU 50a shifts to a failed state of the steering device 2 in which, for example, some of the functions are restricted according to the situation.

In the starting state, the CPU 50a can detect, for example, electrical system abnormalities and communication system abnormalities. In the starting state, the CPU 50a does not execute the normal process, but since the power is on, the CPU 50a can detect the battery voltage Vb of the battery 47. In this case, the CPU 50a can detect electrical system abnormalities. Similarly, in the starting state, the CPU 50a does not execute the normal process, but since the vehicle VC is operating, the CPU 50a can receive signals from the in-vehicle network 8. In this case, the CPU 50a can detect communication system abnormalities.

On the other hand, in the starting state, the CPU 50a may fail to detect, for example, mechanical system abnormalities and sensor system abnormalities even when these abnormalities exist. In the starting state, the CPU 50a does not execute the normal process and therefore may fail to determine tooth skipping or belt fracture in the transmission mechanism 33 or the conversion mechanism 34. In this case, the CPU 50a may fail to detect mechanical system abnormalities even when these abnormalities exist. Similarly, in the starting state, the CPU 50a does not execute the normal process and therefore may fail to determine that the value of the steering torque Th of the torque sensor 41 is not valid. In this case, the CPU 50a may fail to detect a sensor system abnormality about the torque sensor 41. That such a sensor system abnormality may fail to be detected holds true for when the vehicle VC is stationary before traveling after state transition to the normal control state. The same applies to detection of sensor system abnormalities about the steering-side rotation angle sensor 42, the turning-side rotation angle sensor 43, the pinion absolute angle sensor 45, the steering-side current sensor 51, and the turning-side current sensor 52.

Thus, the various abnormalities in the steering device 2 are classified as failures that can be detected in the starting state and failures that may fail to be detected in the starting state. In the following description, electrical system abnormalities and communication system abnormalities that can be detected in the starting state will be referred to as "inapplicable failures," and mechanical system abnormalities and sensor system abnormalities that may fail to be detected in the starting state will be referred to as "applicable failures."

### About Process Relating to Detection of Abnormalities of Steering Device

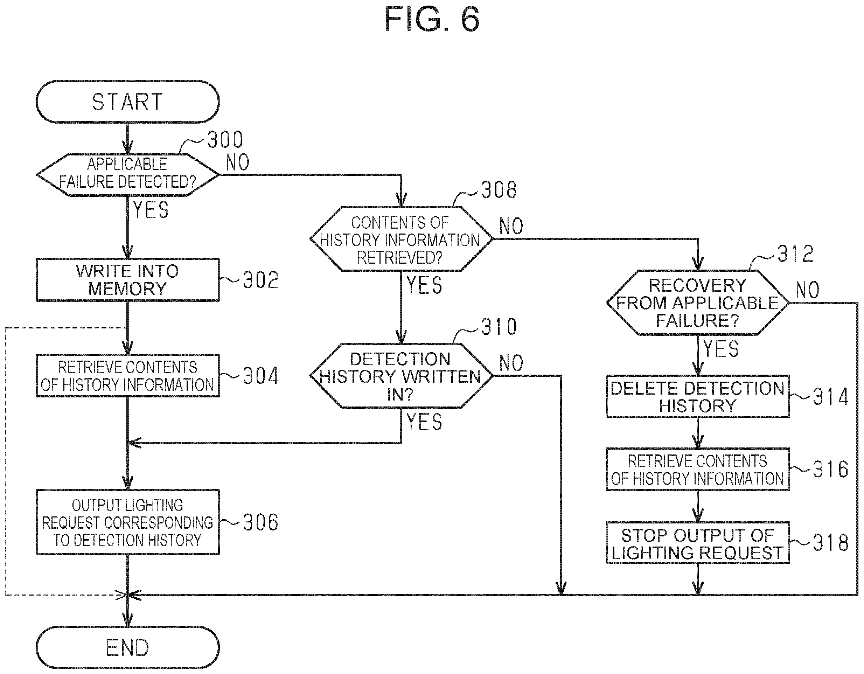

As shown in FIG. 5 and FIG. 6, the CPU 50a executes a process for detecting various abnormalities as the starting process and the normal process. A sequence of processes relating to detection of inapplicable failures is specified in consideration of the fact that they are abnormalities that can be detected regardless of whether the state is the starting state or the normal control state. On the other hand, a sequence of processes relating to detection of applicable failures is specified in consideration of the fact that they may fail to be detected in the starting state.

### About Process Relating to Detection of Inapplicable Failures

FIG. 5 shows one example of the sequence of processes relating to detection of inapplicable failures. In this process, the CPU 50a determines whether an inapplicable failure has been detected (step 200). In step 200, when an inapplicable failure is detected from a state where the inapplicable failure has not been detected until immediately before that, the CPU 50a makes a determination of "step 200: YES." In other cases, the CPU 50a deems that no inapplicable failure is detected and makes a determination of "step 200: NO." The other cases include a case where no inapplicable failure is detected and a case where an inapplicable failure is being detected.

Subsequently, when an inapplicable failure is detected (step 200: YES), the CPU 50a performs writing into the memory 50b (step 202). In step 202, the CPU 50a writes information indicating the detection of the inapplicable failure into the diagnostic information Dn of the storage part 502. In this case, the CPU 50a also writes in the type of the inapplicable failure. When an inapplicable failure is detected, the CPU 50a does not write into the history information Bs of the storage part 501.

Subsequently, the CPU 50a outputs a lighting request WL corresponding to the inapplicable failure detected in step 200 (step 204), and ends the current process and moves to another process. In step 204, the CPU 50a outputs the lighting request WL to the in-vehicle network 8. The process of step 204 is a process for outputting the lighting request WL to the warning light 9 to notify the driver of the state of the steering device 2. The state of the steering device 2 notified to the driver is the state relating to various abnormalities.

More specifically, as shown in FIG. 4, notification of an electrical system abnormality among inapplicable failures is requested by a lighting request WL (R). For example, the lighting request WL (R) is information for notifying that the state of the steering device 2 is a state in which a severe abnormality that needs to be responded to sooner is being detected. Notification of a communication system abnormality among inapplicable failures is requested by a lighting request WL (Y). For example, the lighting request WL (Y) is information for notifying that the state of the steering device 2 is a state in which a minor abnormality that does not interfere with traveling of the vehicle VC is being detected.

In step 204, when the state is such that both of the lighting request WL (R) and the lighting request WL (Y) can be output, the CPU 50a outputs the lighting request WL (R) with priority. For example, the state where both can be output is a state where one of the lighting requests WL is already being output. In step 204, once the CPU 50a outputs the lighting request WL, the CPU 50a continuously outputs it until an output stopping condition is met. In the process relating to detection of inapplicable failures, the output stopping condition is power-off of the vehicle VC or a determination of "step 206 (to be described later): YES." The lighting request WL thus output is input into the meter control device 7. When the lighting request WL is input, the meter control device 7 controls the operation of the warning light 9 so as to light in a corresponding color. For example, when the lighting request WL (R) is input, the meter control device 7 controls the operation of the warning light 9 so as to light in red, and when the lighting request WL (Y) is input, the meter control device 7 controls the operation of the warning light 9 so as to light in yellow.

On the other hand, when an inapplicable failure is not detected in step 200 (step 200: NO), the CPU 50a determines whether the steering device 2 has recovered from an inapplicable failure (step 206). In step 206, when an inapplicable failure has been detected, the CPU 50a determines whether resolution of the inapplicable failure is detected. When the steering device 2 has not recovered from an inapplicable failure (step 206: NO), the CPU 50a ends the current process and moves to another process.

On the other hand, when the steering device 2 has recovered from an inapplicable failure (step 206: YES), the CPU 50a stops the output of the lighting request WL (step 208), and ends the current process and moves to another process.

### About Process Relating to Detection of Applicable Failures

FIG. 6 shows one example of the sequence of processes relating to detection of applicable failures. In this process, the CPU 50a determines whether an applicable failure has been detected (step 300). In step 300, when an applicable failure is detected from a state where the applicable failure has not been detected until immediately before that, the CPU 50a makes a determination of "step 300: YES." In other cases, the CPU 50a deems that no applicable failure is detected and makes a determination of "step 300: NO." The other cases include a case where no applicable failure is detected and a case where an applicable failure is already being detected. In this embodiment, the process of step 300 is one example of the abnormality detection process.

Subsequently, when an applicable failure is detected (step 300: YES), the CPU 50a performs writing into the memory 50b (step 302). In step 302, the CPU 50a writes a detection history Lg that is information indicating the detection of the applicable failure into the history information Bs of the storage part 501 to update the contents. Further, the CPU 50a writes the information indicating the detection of the applicable failure into the diagnostic information Dn of the storage part 502. In this case, the CPU 50a also writes in the type of the applicable failure. In this embodiment, the process of step 302 is one example of the detection result write-in process.

More specifically, as shown in FIG. 4, detection of a mechanical system abnormality among applicable failures is indicated by writing in of a detection history Lg (R). For example, the detection history Lg (R) is information indicating a history that the state of the steering device 2 is a state where a severe abnormality that needs to be responded to sooner has been detected. Further, detection of a sensor system abnormality among applicable failures is indicated by writing in of a detection history Lg (Y). For example, the detection history Lg (Y) is information indicating a history that the state of the steering device 2 is a state where a minor abnormality that does not interfere with traveling of the vehicle VC has been detected.

In step 302, when the state is such that both of the detection history Lg (R) and the detection history Lg (Y) can be written in, the CPU 50a updates by writing in the detection history Lg (R) with priority. For example, the state where both can be written in is a state where one of the detection histories Lg has already been written in. In step 302, when one of the detection histories Lg has already been written in and consequently the contents of the history information Bs need not be updated, the CPU 50a does not execute the process of step 304, and ends the current process and moves to another process. The case where the contents of the history information Bs need not be updated is a case where the detection history Lg of the same type has already been written in or a case where a detection history Lg (R) that is written in with priority has already been written in.

Subsequently, the CPU 50a retrieves the contents of the history information Bs (step 304). In step 304, the CPU 50a retrieves the detection history Lg written in in step 302, i.e., the detection history Lg corresponding to the applicable failure detected in step 300.

Subsequently, the CPU 50a outputs a lighting request WL corresponding to the detection history Lg retrieved in step 304 (step 306), and ends the current process and moves to another process. The process of step 306 is the same process as step 204. In the process relating to detection of applicable failures, an output stopping condition is power-off of the vehicle VC or a determination of "step 312 (to be described later): YES." In this embodiment, the process of step 306 is one example of the lighting request output process.

More specifically, as shown in FIG. 4, notification of a mechanical system abnormality among applicable failures is identified as the detection history Lg (R) is retrieved. In this case, notification of a mechanical system abnormality among applicable failures is requested by the lighting request WL (R). Notification of a sensor system abnormality among applicable failures is identified as the detection history Lg (Y) is retrieved. In this case, notification of a sensor system abnormality among applicable failures is requested by the lighting request WL (Y).

On the other hand, when an applicable failure is not detected in step 300 (step 300: NO), the CPU 50a determines whether the contents of the history information Bs have been retrieved (step 308). In step 308, when the CPU 50a is in the starting state as in step 102 described above, i.e., at the start of the starting process that involves retrieving various information etc., the CPU 50a makes a determination of "step 308: YES." On the other hand, in step 308, when the CPU 50a is not at the start of the starting process that involves retrieving various information etc., the CPU 50a makes a determination of "step 308: NO."

Subsequently, when the contents of the history information Bs have been retrieved (step 308: YES), i.e., the CPU 50a is in the starting state, the CPU 50a determines whether the detection history Lg is written in the contents of the history information Bs (step 310). That the detection history Lg is written in in step 310 indicates that an applicable failure was detected during power-on preceding the current power-on. This indicates that notification by the warning light 9 was made during the power-on preceding the current power-on. That is, this indicates that the current power-on is power-on after the power was turned off in the state where notification by the warning light 9 was made. On the other hand, that the detection history Lg is not written in indicates that notification by the warning light 9 was not made during the power-on preceding the current power-on.

Subsequently, when the detection history Lg is written in (step 310: YES), the CPU 50a moves to step 310 and executes a process relating to the output of the lighting request WL. When a determination of "step 310: YES" is made, the CPU 50a outputs the lighting request WL while an applicable failure has not been detected in step 300. Thus, during the current power-on, as to notification by the warning light 9, the state during the power-on before the power was turned off in the state where the notification was made is taken over.

On the other hand, when the contents of the history information Bs have not been retrieved (step 308: NO), i.e., the CPU 50a is not in the starting state, the CPU 50a determines whether the steering device 2 has recovered from an applicable failure (step 312). In step 312, when an applicable failure has been detected, the CPU 50a determines whether resolution of the applicable failure is detected. In this embodiment, the process of step 300 is one example of the abnormality detection process.

Subsequently, when the steering device 2 has not recovered from an applicable failure (step 312: NO), the CPU 50a ends the current process and moves to another process. On the other hand, when the steering device 2 has recovered from an applicable failure (step 312: YES), the CPU 50a deletes the contents of the history information Bs (step 314). In step 314, the CPU 50a updates the contents by deleting the detection history Lg from the history information Bs of the storage part 501. In this embodiment, the process of step 314 is one example of the detection result write-in process.

Subsequently, the CPU 50a retrieves the contents of the history information Bs (step 316). In step 316, since the CPU 50a has deleted the detection history Lg in step 314, the CPU 50a determines that the detection history Lg is not written in.

Subsequently, the CPU 50a stops the output of the lighting request WL based on the detection history Lg not being written in the contents of the history information Bs (step 318), and ends the current process and moves to another process.

### Workings of Embodiment

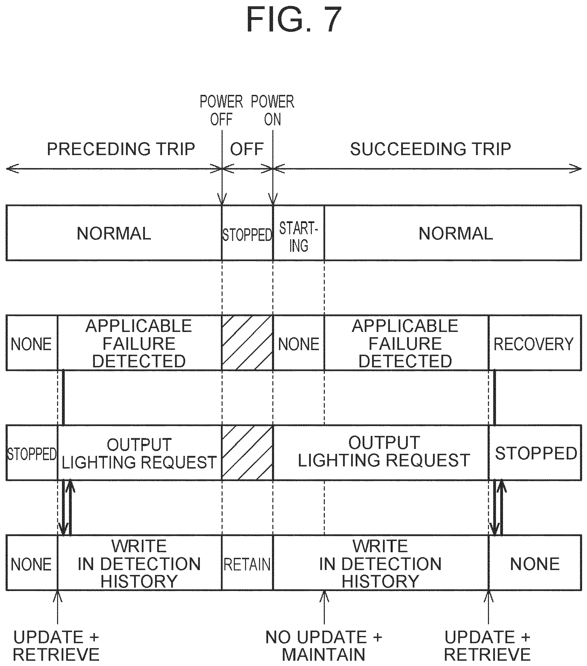

The first chart from the top of FIG. 7 shows one example of the state of the steering device 2 that changes in connection with power-on and power-off. The second and third charts from the top of FIG. 7 show one example of the state of the CPU 50a that changes in connection with detection of an applicable failure. The second chart from the top of FIG. 7 shows the detection state of an applicable failure in the example. The third chart from the top of FIG. 7 shows the output state of the lighting request WL in the example. The fourth chart from the top of FIG. 7 shows the contents of the history information Bs in the example.

For example, the state of the steering device 2 changes such that the power is turned off from the normal control state ("NORMAL" in the chart) during power-on. This situation during the first power-on will be hereinafter referred to as a "preceding trip." Subsequently, the state of the steering device 2 changes so as to undergo state transition via power-off to the starting state ("STARTING" in the chart) as the power is turned on and then undergo state transition to the normal control state. This situation during the succeeding power-on will be hereinafter referred to as a "succeeding trip."

For example, during the preceding trip, the CPU 50a detects an applicable failure. As the applicable failure is detected, the contents of the history information Bs are updated to a state where the detection history Lg is written therein. As the detection history Lg thus written in is retrieved, the output of the lighting request WL is started. As a result, the warning light 9 is lighted.

Subsequently, during the preceding trip, as the power is turned off, the CPU 50a stops operating. As the output stopping condition that the power is turned off is met, the lighting request WL is stopped. As a result, the lighting of the warning light 9 is stopped. The detection history Lg written in the history information Bs is retained during the power-off without being deleted during the power-off.

Thereafter, as the power is turned on after the power-off, the CPU 50a starts the starting process. As the starting process is started, the detection history Lg that is retained during the power-off without being deleted during the power-off is retrieved. As the detection history Lg that has been retained during the power-off without being deleted during the power-off is thus retrieved, the output of the lighting request WL is started. As a result, the warning light 9 is lighted.

Thereafter, by undergoing state transition to the normal control state, the CPU 50a detects an applicable failure. Since the detection history Lg has already been written in the contents of the history information Bs, the contents are not updated. Thus, since the contents of the history information Bs are not updated, the contents of the history information Bs and the output state of the lighting request WL are both maintained. As a result, the lighting state of the warning light 9 is maintained.

According to this embodiment, in the case where the detection history Lg is written in the contents of the history information Bs when the power is turned on, the CPU 50a can output the lighting request WL from immediately after the power-on, even when an applicable failure cannot be detected. Thus, even when an applicable failure cannot be detected, if the lighting request WL was output during the preceding trip, the output state during the preceding trip can be taken over to start the output from the starting state that is at the start of the succeeding trip.

### Advantages of Embodiment

The CPU 50a is configured such that, even when an applicable failure cannot be detected, the output state during the preceding trip can be taken over to start the output of the lighting request WL from the starting state that is at the start of the succeeding trip. Therefore, if the warning light 9 was lighted during the preceding trip, the lighting state during the preceding trip can be taken over to light the warning light 9 from the starting state that is at the start of the succeeding trip. For example, in the succeeding trip after the lighting request WL was output during the preceding trip, even when an applicable failure cannot be detected, it is highly likely that an applicable failure has been taken over from the preceding trip. Thus, the occurrence of a state where there is an applicable failure and nevertheless the warning light 9 fails to light can be reduced.

The CPU 50a is configured to retrieve the contents of the history information Bs when an applicable failure is detected. Thus, discrepancy in contents between the lighting request WL and the history information Bs can be prevented.

The CPU 50a is configured to delete the detection history Lg from the contents of the history information Bs when recovery from an applicable failure is detected. In addition, the CPU 50a is configured to retrieve the contents of the history information Bs, and stop the output of the lighting request WL based on the detection history Lg not being written in the retrieved contents.

For example, as shown in FIG. 7, during the succeeding trip, the CPU 50a determines recovery from an applicable failure. As the recovery from an applicable failure is determined, the contents of the history information Bs are updated to a state where the detection history Lg has been deleted. As the detection history Lg is thus deleted, the output of the lighting request WL is stopped. As a result, the lighting of the warning light 9 is stopped. Thus, the situation where the warning light 9 is allowed to light can be optimized.

Even when the CPU 50a is configured to go through execution of the starting process after power-on, the CPU 50a can output the lighting request WL from immediately after the power-on if the detection history Lg is written in the contents of the history information Bs. This is especially effective as a countermeasure against an applicable failure that cannot be detected in the situation of the starting process.

The contents of the diagnostic information Dn and the history information Bs are configured to be deleted through operation from the diagnostic tool 49. Thus, the contents of the diagnostic information Dn and the history information Bs can be synchronized with each other through operation from the diagnostic tool 49. Thus, the diagnostic information Dn and the history information Bs, which are different in the role and the method of management from each other, can be appropriately managed.

For example, the type of the detection history Lg is the same among sensor system abnormalities regardless of the type of the abnormality. Thus, the required amount of data can be reduced compared with when one type of detection history Lg is prepared for each type of abnormality. Accordingly, the capacity of the memory 50b can be kept down.

### Other Embodiments

The above-described embodiment may be changed as follows. The following other embodiments can be combined with one another within such a range that no technical inconsistency arises.

The method of deleting the contents of the diagnostic information Dn and the history information Bs may be a method that does not use the diagnostic tool 49, for example, by allowing the contents to be deleted by a specific operation of a worker at a maintenance factory. In addition, the contents of the diagnostic information Dn and the history information Bs may be such that they cannot be deleted unless the memory 50b itself is replaced. That is, the contents of the diagnostic information Dn and the history information Bs may be retained even after battery replacement. However, the contents of the history information Bs should be deletable by the CPU 50a.

The starting process can also be specified as a process that is part of the normal process. In this case, in the normal process, a period in which the process corresponding to the starting process is executed corresponds to the starting state in the above-described embodiment.

The process of retrieving the history information Bs can also be specified as a process that is constantly executed after power-on. Regarding the process of FIG. 6, the processes of step 304 and step 306 after a determination of "step 300: YES" may be omitted, while a process, similar to the process of step 204, of outputting the lighting request WL corresponding to the applicable failure detected in step 300 may be included. Thus, the condition for outputting the lighting request WL for an applicable failure is that an applicable failure is detected or that the detection history Lg is written in the contents of the history information Bs. The other embodiment described here can be applied to the processes of step 316 and step 318 after a determination of step "312: YES" as well. In this case, the process of FIG. 6 should include a process, similar to the process of step 208, of stopping the output of the lighting request WL on the condition of a determination of "step 312: YES."

Regarding the process of FIG. 6, the processes of step 312 and the subsequent steps may be omitted. In this case, the detection history Lg written in the contents of the history information Bs cannot be deleted otherwise than through operation of the diagnostic tool 49.

Regarding the process of FIG. 6, the processes of step 316 and step 318 may be omitted. In this case, even when the detection history Lg is deleted by step 314, each of the output state of the lighting request WL, i.e., the lighting state of the warning light 9 is maintained during power-on. Thereafter, from the next power-on onward, the output of the lighting request WL is stopped and the lighting of the warning light 9 is stopped.

In FIG. 6, even when the contents of the history information Bs are not updated in the process of step 302, the processes of step 304 and the subsequent steps may be executed. The sequence of processes of FIG. 6 is not limited to the sequence of FIG. 6 and can be changed as appropriate. For example, the sequence of processes may be changed such that the processes of step 308 and step 310 are executed before the process of step 300. In this case, after a determination of "step 308: NO" and a determination of "step 310: NO," the CPU 50a can move to the process of step 300. After a determination of "step 300: NO," the CPU 50a can move to the process of step 312.

The sequence of processes relating to applicable failures may be applied to detection of inapplicable failures as well. Thus, the occurrence of a state where there is an inapplicable failure and nevertheless the warning light 9 fails to light can be more favorably reduced. In this case, the process of FIG. 5 may be deleted.

Abnormalities classified as applicable failures are not limited to those classified in the above-described embodiment but can be changed as appropriate. For example, of sensor system abnormalities, an abnormality of the torque sensor 41 may be classified as an inapplicable failure. Communication system abnormalities may be classified as applicable failures.

The number of types of detection histories Lg is not limited to two but can be changed as appropriate. For example, the number of types may be changed to one or three or more. - The correspondence relationships between the types of applicable failures and the types of detection histories Lg are not limited to the relationships in the above-described embodiment but can be changed as appropriate. For example, abnormalities of the steering-side rotation angle sensor 42, the turning-side rotation angle sensor 43, and the pinion absolute angle sensor 45 that are used to detect mechanical system abnormalities may be associated with the detection history Lg (R) as severe abnormalities. In addition, the correspondence relationships between the types of applicable failures and the types of detection histories Lg may be classified according to the type of contents of the failed state to be set. That is, the type of detection history Lg may differ according to the type of sensor system abnormality.

The warning light 9 may be realized as one of the components of the steering device 2. For example, the warning light 9 may be provided on the steering wheel 3. The method of notifying the driver of the state of the steering device 2 is not limited to the lighting of the warning light 9 in the above-described embodiment but can be changed as appropriate. For example, an alarm device that notifies information by appealing to the auditory sense of the driver, or a physical sensation generation device that notifies the driver of information through a physical sensation may be adopted. Examples of the alarm device include a speaker and a buzzer. Examples of the physical sensation generation device include a vibration device that vibrates a vehicle accessory, such as a seat, that comes into contact with the driver.

The steering control device 1 may have a plurality of CPUs among which the function of operating the steering-side motor 13 and the function of operating the turning-side motor 32 are divided. In this case, each CPU should be configured to appropriately detect abnormalities that can be detected based on the control target.

The operation member that the driver operates to steer the vehicle VC is not limited to the steering wheel 3. For example, the operation member may be a joystick. - The steering-side motor 13 that is mechanically coupled to the steering wheel 3 is not limited to a three-phase brushless motor. For example, the steering-side motor 13 may be a brushed direct-current motor.

The turning unit 6 transmits the rotation of the turning-side motor 32 to the conversion mechanism 34 through the transmission mechanism 33. However, without being limited thereto, the turning unit 6 may be configured to transmit the rotation of the turning-side motor 32 to the conversion mechanism 34, for example, through a gear mechanism. Or the turning unit 6 may be configured such that the turning-side motor 32 directly rotates the conversion mechanism 34. Further, a configuration in which the turning unit 6 includes a second rack-and-pinion mechanism may be adopted, and the turning unit 6 may be configured to convert the rotation of the turning-side motor 32 into reciprocating motion of the rack shaft 22 by the second rack-and-pinion mechanism.

The turning unit 6 is not limited to the configuration in which the right turning wheel 5 and the left turning wheel 5 operate in conjunction with each other. In other words, the right turning wheel 5 and the left turning wheel 5 may be independently controllable.

The steering device 2 has a link-less structure in which the steering unit 4 and the turning unit 6 are mechanically always cut off. However, without being limited thereto, the steering device 2 may have a structure in which the steering unit 4 and the turning unit 6 can be mechanically cut off from each other by, for example, a clutch. The steering device 2 is not limited to a steer-by-wire steering device, and may instead be an electric power-assisted steering device that applies motor torque to the steering shaft 11 or the rack shaft 22.

The above-described embodiment is applied to the steering device 2. However, without being limited thereto, the above-described embodiment may be applied to other in-vehicle units, for example, a brake device or a device relating to a powertrain of the vehicle VC.

## Claims

1. A control device (1) for an in-vehicle unit (2) that is applied to the in-vehicle unit (2) installed in a vehicle having a warning light (9) and that is configured to output a lighting request to the warning light (9) to notify a driver of a state of the in-vehicle unit (2), the control device (1) **characterized by** comprising:
a control circuit (50a) configured to execute at least a process relating to the output of the lighting request; and
a storage circuit (50b) configured to store at least information that is used in the process executed by the control circuit (50a), wherein:
the control circuit (50a) is configured to execute an abnormality detection process for detecting an abnormality of the in-vehicle unit (2), a detection result write-in process for, when the abnormality of the in-vehicle unit (2) is detected by the abnormality detection process, writing a detection history showing the detection of the abnormality into history information of the storage circuit (50b), and a lighting request output process for outputting the lighting request;
the storage circuit (50b) is configured to retain contents of the history information even when the in-vehicle unit (2) is powered on or powered off;
the control circuit (50a) is configured to retrieve the contents of the history information from the storage circuit (50b) when the in-vehicle unit (2) is powered on; and
the control circuit (50a) is configured to, when the detection history is written in the retrieved contents, output the lighting request even when the abnormality of the in-vehicle unit (2) fails to be detected by the abnormality detection process.

2. The control device (1) for the in-vehicle unit (2) according to claim 1, **characterized in that**:
the control circuit (50a) is configured to, when the abnormality of the in-vehicle unit (2) is detected by the abnormality detection process, retrieve the contents of the history information from the storage circuit (50b); and
the control circuit (50a) is configured to output the lighting request based on the detection history written in the retrieved contents.

3. The control device (1) for the in-vehicle unit (2) according to claim 2, **characterized in that**:
the abnormality detection process includes a process of detecting recovery of the in-vehicle unit (2) from the abnormality;
the detection result write-in process includes a process of, when recovery of the in-vehicle unit (2) from the abnormality is detected by the abnormality detection process, deleting the detection history from the history information of the storage circuit (50b);
the control circuit (50a) is configured to, when recovery of the in-vehicle unit (2) from the abnormality is detected by the abnormality detection process, retrieve the contents of the history information from the storage circuit (50b); and
the control circuit (50a) is configured to, when the detection history has been deleted from the retrieved contents, stop the output of the lighting request.

4. The control device (1) for the in-vehicle unit (2) according to claim 3, **characterized in that**:
the control circuit (50a) is configured to execute a starting process when the in-vehicle unit (2) is powered on; and
the control circuit (50a) is configured to retrieve the contents of the history information from the storage circuit (50b) during the starting process.

5. The control device (1) for the in-vehicle unit (2) according to any one of claims 1 to 4, **characterized in that**:
the storage circuit (50b) is configured to store diagnostic information, the diagnostic information being information which is not used in the process executed by the control circuit (50a) and into which, when the abnormality of the in-vehicle unit (2) is detected by the abnormality detection process, a diagnosis indicating the detection of the abnormality is written; and
the storage circuit (50b) is configured to delete contents of the diagnostic information and the history information through operation from a diagnostic tool that is connected to the vehicle from an outside.

6. A control method of an in-vehicle unit (2) installed in a vehicle having a warning light (9), the in-vehicle unit (2) including a control circuit (50a) configured to execute at least a process relating to output of a lighting request to the warning light (9) for notifying a driver of a state of the in-vehicle unit (2), and a storage circuit (50b) configured to store at least information that is used in the process executed by the control circuit (50a),
the control method **characterized by** comprising:
detecting, by the control circuit (50a), an abnormality of the in-vehicle unit (2);
when the abnormality of the in-vehicle unit (2) is detected, writing, by the control circuit (50a), a detection history showing the detection of the abnormality into history information of the storage circuit (50b);
outputting, by the control circuit (50a), the lighting request;
retaining, by the storage circuit (50b), contents of the history information even when the in-vehicle unit (2) is powered on or powered off;
when the in-vehicle unit (2) is powered on, retrieving, by the control circuit (50a), the contents of the history information from the storage circuit (50b); and
when the detection history is written in the retrieved contents, outputting, by the control circuit (50a), the lighting request even when the abnormality of the in-vehicle unit (2) fails to be detected.
